# EUROPÄISCHE PATENTSCHRIFT

(11) **EP 2 331 284 B1**
(45) Veröffentlichungstag und Bekanntmachung des Hinweises auf die Patenterteilung: **10.10.2012**
(21) Anmeldenummer: 09782166.4
(22) Anmeldetag: 25.08.2009
(51) Int. Cl.: B23K 1/012

(54) **VERFAHREN ZUM LÖTEN EINES METALLISCHEN WABENKÖRPERS ZUR ABGASBEHANDLUNG**
METHOD FOR BRAZING A METALLIC HONEYCOMB FOR EXHAUST EMISSION CONTROL
PROCÉDÉ DE BRASAGE D'UN CORPS EN NID-D'ABEILLES MÉTALLIQUE EN VUE DU TRAITEMENT DE GAZ D'ÉCHAPPEMENT

(30) Priorität: 17.09.2008 DE 102008047498
(43) Veröffentlichungstag der Anmeldung: 15.06.2011
(73) Patentinhaber: Emitec Gesellschaft für Emissionstechnologie mbH, 53797 Lohmar (DE)
(72) Erfinder: CASPER, Hans-Peter, 53844 Troisdorf (DE); KOTTHOFF, Hubertus, 53809 Ruppichteroth (DE); GUTOWSKI, Jörg, 99817 Eisenach (DE); CHAUCHET, Dietmar, 51149 Köln (DE); WIERES, Ludwig, 51491 Overath (DE)
(74) Vertreter: Rössler, Matthias
(86) Internationale Anmeldenummer: PCT/EP2009/060934
(87) Internationale Veröffentlichungsnummer: WO 2010/031659

(56) Entgegenhaltungen:
- WO-A-02/081137
- DE-A1- 19 943 878

## Beschreibung

Die vorliegende Erfindung betrifft Verfahren zum Löten eines metallischen Wabenkörpers zur Abgasbehandlung, insbesondere mobiler Verbrennungsgase eines Motors, wie beispielsweise eines Otto-Motors und/oder eines Diesel-Motors.

Neben keramischen Wabenkörpern als Trägerstrukturen für beispielsweise katalytisch aktive Substanzen, existieren derzeit auch eine Vielzahl metallischer Wabenkörper, die mit metallischen Werkstoffen aufgebaut sind. Hierbei stehen insbesondere Wabenkörper im Fokus, die mit mehreren Teilen zu einem Wabenkörper zusammengefügt werden. Dabei kommen beispielsweise metallische Platten, metallische Bleche, metallische Folien und dergleichen zum Einsatz. Dabei bilden die Folien (hier als Oberbegriffe für alle vorstehend genannten Trägermaterialien verwendet) zumindest Strukturen aus und sind so zueinander angeordnet, dass diese Kanäle bilden. So ist beispielsweise bekannt, gewellte und/oder glatte Folien miteinander spiralig aufzuwickeln und/oder diese zu stapeln und/oder miteinander zu biegen und in ein Gehäuse einzufügen. Das Gehäuse besteht überwiegend ebenfalls aus Metall.

Bei der Herstellung solcher metallischer Wabenkörper ist es von Bedeutung, dass diese letztendlich den hohen thermischen und/oder dynamischen Belastungen im Abgassystem mobiler Verbrennungskraftmaschinen standhalten. Hierbei ist einerseits die thermische Wechselbeanspruchung zu erwähnen (von Umgebungstemperatur bis beispielsweise 800 oder sogar 900 °C) sowie die dynamische Schwingungserregung, z. B. durch die Fahrzeugerschütterung aber auch in Folge der durch die Verbrennungsprozesse entstehenden Druckwellen im Abgassystem selbst. Im Übrigen ist auch darauf hinzuweisen, dass solche Wabenkörper regelmäßig einer hoch korrosiven Umgebung ausgesetzt sind. Unter all diesen Bedingungen sollte die Verbindung der Folien miteinander bzw. mit dem Gehäuse dauerhaft und stabil ausgeführt sein. Das Ablösen von Teilen der Folien führt insbesondere dazu, dass diese stromabwärts gelegene Komponenten des Abgassystems gefährden und/oder die Strömungswege für das Abgas blockieren.

Im Übrigen ist bekannt, eine selektive Lötung solcher Wabenkörper vorzunehmen. Das heißt z. B., dass nicht erwünscht ist, alle Kontaktbereiche der Folien miteinander bzw. der Folien mit dem Mantelrohr zu verlöten. Vielmehr ist beispielsweise bevorzugt, die Lötverbindung zwischen den Folien und dem Gehäuse in umlaufenden Streifen vorzusehen. Auch bezüglich der Lötverbindungen der Folien miteinander sind gegebenenfalls axiale Teilbereiche der gesamten Wabenstruktur verlötet, andere nicht. Unter Umständen können auch über den Querschnitt der Wabenstruktur betrachtet Teilabschnitte der Kontaktstellen zwischen den Folien verlötet sein und andere nicht. Mit diesem gezielten, vorbestimmten Löten soll erreicht werden, dass die auftretenden thermischen Spannungen im Inneren des Wabenkörpers durch die Schaffung gezielter Deformationsbereiche, in denen die Bauteile des Wabenkörpers gegeneinander relativ bewegbar sind, ausgeglichen werden.

Zur Sicherstellung eines entsprechend dauerhaltbaren metallischen Wabenkörpers wurden Lötverfahren vorgeschlagen, die insbesondere bei sehr hohen Temperaturen und Vakuum durchgeführt wurden. Damit ist stets eine genaue Prozessführung einzuhalten und ein hoher apparativer Aufwand erforderlich. Als Beispiel für ein Verfahren zur Herstellung eines solchen metallischen Wabenkörpers sei auf die WO 96/08336 A1 verwiesen. Dort wird insbesondere erläutert, dass ein Vakuum und Temperaturen bis oberhalb von 1200 °C realisiert werden müssen.

Hiervon ausgehend ist es Aufgabe der vorliegenden Erfindung, die mit Bezug auf den Stand der Technik geschilderten Probleme zumindest teilweise zu lösen. Insbesondere soll ein Verfahren zum Löten eines metallischen Wabenkörpers zur Abgasbehandlung vorgeschlagen werden, das einfach, insbesondere im Rahmen eines Durchlaufverfahrens, durchführbar ist. Außerdem sollen damit Wabenkörper mit gezielten Lötverbindungen und einem gegebenenfalls dauerhaften Korrosionsschutz herstellbar sein. Darüber hinaus soll auch eine Vorrichtung zur Durchführung des Verfahrens angegeben werden.

Diese Aufgaben werden gelöst mit einem Verfahren gemäß den Schritten des Patentanspruchs 1. Vorteilhafte Ausgestaltungen der Erfindung sind in den abhängig formulierten Patentansprüchen angegeben. Die Beschreibung, insbesondere im Zusammenhang mit den Figuren, erläutert die Erfindung weiter und gibt zusätzlich Ausführungsbeispiele der Erfindung an.

Das erfindungsgemäße Verfahren zum Löten eines metallischen Wabenkörpers zur Abgasbehandlung umfasst zumindest folgende Schritte:
a) Vorbehandeln des Wabenkörpers bei einer Temperatur oberhalb von 400 °C;
b) Abkühlen des Wabenkörpers;
c) Löten des Wabenkörpers bei einer Temperatur im Bereich von 1050 °C bis 1100 °C unter Atmosphärendruck;
d) Abkühlen des Wabenkörpers.

Zunächst sei an dieser Stelle darauf hingewiesen, dass mit dem Verfahren insbesondere die eingangs dargestellten Arten von metallischen Wabenkörpern dauerhaft verbunden werden können. Mit "Löten" ist hier stets das so genannte HartLöten gemeint.

Schritt a) kann insbesondere auch mehrere Prozesse umfassen. Generell kann Schritt a) als Reinigungsschritt angesehen werden. Dabei ist es beispielsweise möglich, den Wabenkörper zunächst an Luft und bei Atmosphärendruck auf eine Temperatur zwischen 70 und 100 °C vorzuheizen, um insbesondere im Wabenkörper befindliches Wasser zu verdampfen. Darüber hinaus wird ein Prozess durchgeführt, in dem der Wabenkörper auf eine Temperatur von mindestens 400 °C, beispielsweise bis ca. 500 °C oder 550 °C, weiter erwärmt wird. In diesem Prozessschritt werden neben Wasser beispielsweise auch Öle, Fette oder ähnliche Bestandteile aus dem Wabenkörper ausgetrieben. Zu diesem Zweck kann es förderlich sein, einen leichten Unterdruck zu realisieren, so dass die Behandlung des Wabenkörpers bei einer Temperatur oberhalb von 400 °C, z. B. bei einem Druck von 400 bis 800 mbar, stattfindet. Schritt a), bzw. die Temperaturbehandlung oberhalb von 400 °C, sollte für eine Zeitdauer von zumindest 60 min aufrecht erhalten werden, gegebenenfalls sogar mindestens 80 min, wobei aus energetischen Gründen diese Behandlung auf maximal 2 Std. begrenzt werden sollte.

Danach sollte wieder eine Abkühlung des Wabenkörpers einsetzen (Schritt b)). Dann ist bevorzugt, dass der Wabenkörper nicht auf Umgebungstemperatur abgekühlt wird, sondern bei einer erhöhten Temperatur gehalten wird. Der Kühlprozess selbst kann durch ein geeignetes Kühlemedium, wie beispielsweise kühle Luft, durchgeführt werden. Bevorzugt ist, dass der Wabenkörper im Schritt b) auf eine Temperatur zwischen 50 und 250 °C abgekühlt und gehalten wird. Auch dieser Schritt sollte bevorzugt zumindest eine Stunde aufrecht erhalten werden.

Danach sind die metallischen Wabenkörper soweit vorbereitet, dass diese den tatsächlichen Löt-Schritt durchführen können (Schritt c)). Hierbei wird der Wabenkörper mit dem darin befindlichen Lot über einen längeren Zeitraum auf eine Temperatur im Bereich von 1050 °C bis 1100 °C erwärmt. Dabei herrscht im Wesentlichen Atmosphärendruck (ca. 1000 mbar). Bei dem hier angegebenen Temperaturbereich ist das Lot geschmolzen und verteilt sich (gegebenenfalls auch aufgrund einer Kapillarwirkung) in den gewünschten, vorgegebenen Bereichen des metallischen Wabenkörpers und benetzt demgemäß die zu verbindenden, gewünschten Lotbereiche.

Im Anschluss daran wird der Wabenkörper erneut abgekühlt. Dabei ist bevorzugt, dass die Abkühlgeschwindigkeit des Wabenkörpers ähnlich der Aufheizgeschwindigkeit im Rahmen des Schrittes c) ist. Somit wird in Schritt d) das Abkühlen des Wabenkörpers beispielsweise in einer Zeitspanne von mindestens 60 min erreicht. Zum Abkühlen können wiederum geeignete Fluide und/oder Wärmetauscher vorgesehen sein, die mit der Prozessumgebung des Wabenkörpers der dem Wabenkörper selbst in Kontakt sind. Gerade bei einem Kontakt des Fluides mit dem Wabenkörper sind als Fluide bevorzugt gasförmige Fluide (Gase) einzusetzen.

Bei den hier veranschaulichten Verfahren ist als besondere Errungenschaft herauszustellen, dass der Lötprozess (Schritt c)) ohne ein Vakuum auskommt, wodurch die Handhabung und der apparative Aufwand für die Herstellung solcher metallischer Wabenkörper deutlich reduziert wird. Dies spielt insbesondere deshalb eine Rolle, weil solche metallische Wabenkörper in einer Serienfertigung hergestellt werden, so dass die Vermeidung des Vakuums in diesem Prozessschritt zu einer deutlichen Vereinfachung und kostengünstigen Herstellung der Wabenkörper führt. Außerdem ist so auch ein (voll-)automatisches Beladen und Entladen der Apparaturen ermöglicht.

Gemäß einer Weiterbildung des Verfahrens wird vorgeschlagen, dass zumindest während der Schritte a) und c) eine permanente Prozessgasspülung durchgeführt wird. Gegebenenfalls wird auch als vorteilhaft angesehen, dass während der Schritte b) und/oder d) eine permanente Prozessgasspülung durchgeführt wird. Unter einer "Prozessgasspülung" wird verstanden, dass das die Wabenkörper umgebende Prozessgas dem Behandlungsraum zugeführt und wieder entzogen wird, so dass ein permanenter Austausch des Prozessgases stattfindet. Dabei kann eine besonders hohe Reinheit des Prozessgases in der Umgebung der metallischen Wabenkörper eingehalten werden. In Folge der permanenten Zufuhr und/oder Abfuhr des Prozessgases wird auch erreicht, dass die aus dem metallischen Wabenkörper austretenden Substanzen, Dämpfe, Partikel und dergleichen entfernt werden. Als Prozessgas kommen insbesondere eines oder mehrere folgender Gase in Betracht: Luft, Argon, Wasserstoff. Das Abkühlen der Wabenkörper in den Schritten b) und d) erfolgt bevorzugt mit dem Prozessgas Luft (ggf. auch zur Oxidation; bevorzugt ggf. erst ab Temperaturen von höchsten 200 °C oder sogar nur maximal 150 °C). Während des Haltens des Wabenkörpers auf einer erhöhten Temperatur in Schritt b) und/oder in dem Löt-Schritt c) wird bevorzugt (überwiegend) Argon als Prozessgas eingesetzt.

Darüber hinaus wird als vorteilhaft angesehen, dass während Schritt c) überwiegend eine Temperaturerhöhung stattfindet. Das soll insbesondere zum Ausdruck bringen, dass keine abrupte Erhitzung der metallischen Wabenkörper während des Lötprozesses gewünscht ist. Vielmehr soll der Prozess der Temperaturerhöhung zeitlich länger andauern, als der Halteprozess des Wabenkörpers in dem angegebenen Temperaturbereich von 1050 °C bis 1100 °C. Bevorzugt ist, dass die Zeitdauer für die Temperaturerhöhung mindestens 20 %, gegebenenfalls bis zu 50 % oder sogar 100 % länger dauert, als das Halten des Wabenkörpers in dem vorstehend genannten Temperaturbereich. Für die Temperaturerhöhung kann insbesondere ein Zeitraum von 60 bis 100 min veranschlagt werden.

Des Weiteren ist vorteilhaft, dass während Schritt c) eine Reinheit des Prozessgases von mindestens 99,999 % realisiert wird. In diesem Fall wird insbesondere Argon als Schutzgas eingesetzt, wobei gegebenenfalls auch Anteile von Wasserstoff zugeführt werden können. Dabei wird ganz bevorzugt eine Gasreinheit von mindestens 6.0 realisiert. Beide Prozessgase werden dabei mit etwa Atmosphärendruck (ca. 1000 mbar) zugeführt und kontinuierlich ausgetauscht. Bevorzugt ist bei einer gleichzeitigen Anwendung von Argon und Wasserstoff, dass der Wasserstoffanteil deutlich unter 10 Vol.-% liegt.

Zudem wird hier auch angegeben, dass der Wabenkörper mit einem Eisenwerkstoff gebildet sein sollte, der als Haupt-Legierungselemente Chrom und Aluminium aufweist, wobei der Chrom-Anteil mindestens um den Faktor 3 größer ist als der Aluminium-Anteil. Dabei ist ganz besonders bevorzugt, dass der Chrom-Anteil beispielsweise im Bereich von 12 bis 25 Gew.-% liegt, während der Aluminium-Anteil beispielsweise im Bereich von 3 bis 6 Gew.-% liegt. Beispiele für entsprechende Werkstoffe sind unter der Nummer 1.4767 oder 1.4725 des Deutschen Stahlschlüssels aufzufinden.

Darüber hinaus wird als vorteilhaft angesehen, dass für dieses Verfahren ein Nickel-Basis-Lot eingesetzt wird, wobei als Hauptzusatzstoffe Chrom, Phosphor und Silicium vorhanden sind. Ganz besonders bevorzugt ist, dass die Anteile der Haupt-Zusatzstoffe in folgender Reihe abnehmen: Chrom, Phosphor, Silicium. Bevorzugt ist, dass der Chromgehalt des Nickel-Basis-Lots oberhalb des Chrom-Anteils des Werkstoffs des Wabenkörpers liegt, beispielsweise im Bereich von 23 bis 25 Gew.-%. Die Haupt-Zusatzstoffe Phosphor und Silicium sollten zusammen den Anteil des Chroms nicht übertreffen. Entsprechende Nickel-Basis-Lote sind beispielsweise unter der Bezeichnung Nicrobraz der Fa. Wall Colmonoy Ltd. erhältlich.

Einer Weiterbildung des Verfahrens zur Folge wird der Wabenkörper nach Schritt c) in einem Schritt e) oxidiert. Das heißt mit anderen Worten insbesondere, dass der Wabenkörper (wieder) einer oxidativen Umgebung ausgesetzt wird, also beispielsweise Temperaturen von oberhalb 600 °C, beispielsweise um etwa 800 °C. Dabei wird Luft und/oder Sauerstoff als Prozessgas zugeführt. Dieser Schritt e) kann beispielsweise nochmals für 20 bis 60 min aufrecht erhalten werden. Während dieses Schrittes e) werden die Oberflächen des Wabenkörpers mit einer O-xidschicht versehen, insbesondere Aluminiumoxid. Diese Oxidschicht dient insbesondere als Korrosionsschutz und zur Unterbindung von Diffusionsanbindungen an der nicht miteinander verlöteten, aneinander anliegenden Kontaktstellen der Folien.

Der Schritt e) kann sich unmittelbar an den Schritt c) anschließen und/oder es ist auch möglich, dass erst eine signifikante Abkühlung der Wabenkörper bzw. der Umgebung vorgenommen wird. Demnach kann insbesondere auch ein gemeinsamer Ofen für die Durchführung der Schritte c) und e) vorgesehen sein, wobei die die unterschiedlichen Umgebungsbedingungen (Sauerstoff - Schutzgas) mittels entsprechender Trennmittel (Schieber, Zwischenwände,..) voneinander getrennt werden. So kann Schritt e) beispielsweise auch bei Temperaturen knapp unter der Schmelztemperatur des Lotes (z.B. 50 °C tiefer) durchgeführt werden, so dass die Schritte e) und c) in unmittelbarer räumlicher Nachbarschaft durchgeführt werden können.

Des Weiteren wird als vorteilhaft angesehen, dass während c) eine Überwachung des Sauerstoffgehalts erfolgt. Zu diesem Zweck können beim Eintritt in die Behandlungskammer bzw. zu Beginn des Verfahrensschritts und/oder am Austritt der Behandlungskammer bzw. am Ende des Verfahrens entsprechende Sensoren vorgesehen sein, die die Menge bzw. Qualität des Prozessgases, insbesondere im Hinblick auf den vorhandenen Sauerstoff, erfassen. Hierbei kommen insbesondere sogenannte Lambda-Sonden zum Einsatz.

Für eine besonders gute Serientauglichkeit des Verfahrens spricht, dass bei dem Verfahren das Prinzip des Durchlauf-Prozesses verwirklicht wird. Dabei sind die Wabenkörper beispielsweise in bestimmten Haltesystemen angeordnet und werden auf einer zusammenhängenden, gegebenenfalls geschlossenen, Förderstrecke durch die einzelnen Behandlungsschritte mit einer gleichbleibenden, vorgegebenen Taktfrequenz hindurchgeführt.

Gerade zur Durchführung des Verfahrens in eben genanntem Durchlauf-Prozess ist es bevorzugt, eine Vorrichtung einzusetzen, bei der ein erster Ofen zur Durchführung des Schrittes a) und ein zweiter Ofen zur Durchführung des Schrittes c) vorgesehen ist, wobei die Vorrichtung weiter ein Fördersystem aufweist, das sich durch die beiden Öfen hindurch erstreckt, einen Taktantrieb hat und mit Schiebern in Umgebungszonen unterteilt ist. Bevorzugt handelt es sich beim Fördersystem um einen Kreis-Förderer, mit dem eine Vielzahl von Wabenkörpern gleichzeitig gefördert und behandelt werden können. Dabei ist das Fördersystem gegebenenfalls (abschnittsweise) gekapselt, wobei in Förderrichtung Schieber, die während eines Taktes des Fördersystems die Wabenkörper voneinander trennen, konkrete Umgebungszonen begrenzen, beispielsweise hinsichtlich der dazwischen befmdlichen Temperatur und/oder des Prozessgases. Für den Fall des Transportes werden die Schieber (kurzzeitig) geöffnet und eine vorgegebene Anzahl von Wabenkörpern in die jeweilige Umgebungszone ein- und ausgeführt.

Die Erfindung sowie das technische Umfeld werden nachfolgend anhand der Figuren näher erläutert. Es ist darauf hinzuweisen, dass die in den Figuren gezeigten Ausführungsvarianten zwar bevorzugt sind, die Erfindung jedoch nicht darauf beschränkt ist. Es zeigen schematisch:
- Fig. 1:: Eine Draufsicht auf ein Ausführungsbeispiel eines metallischen Wabenkörpers,
- Fig. 2:: ein Ablaufdiagramm einer Ausführungsvariante des erfindungsgemäßen Verfahrens,
- Fig. 3:: den Aufbau einer Ausführungsvariante einer Vorrichtung zur Durchführung des Verfahrens,
- Fig. 4:: eine erste Temperaturkurve, und
- Fig. 5:: eine zweite Temperaturkurve.

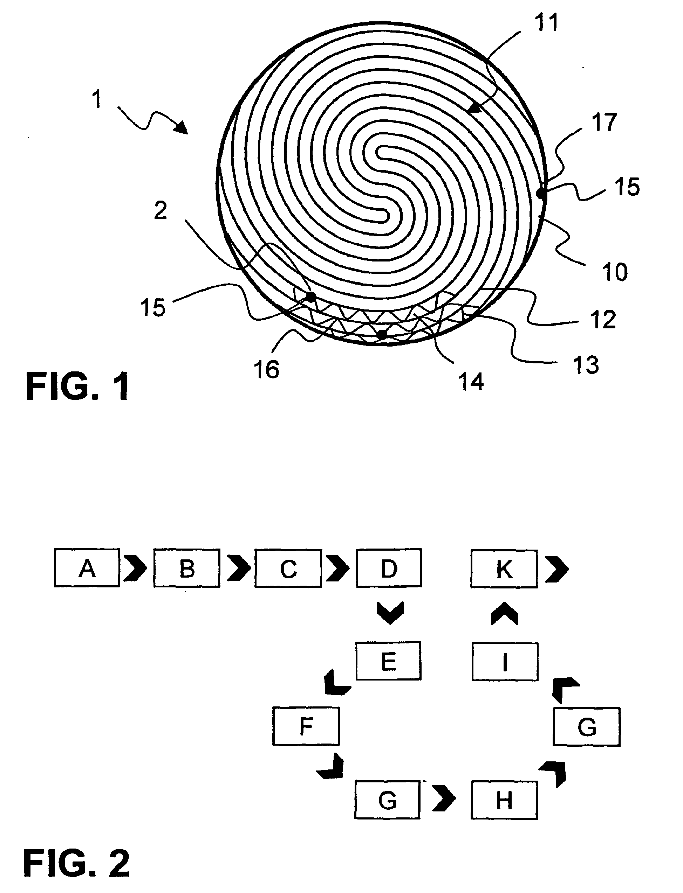

Fig. 1 veranschaulicht schematisch eine Ausführungsvariante eines metallischen Wabenkörpers 1. Der Wabenkörper 1 weist hier ein im Wesentlichen zylindrisches Gehäuse 10 auf, dies ist aber nicht zwingend erforderlich. Im Inneren des Gehäuses 10 ist eine Vielzahl von Folien angeordnet, wobei hier glatte Folien 12 und strukturierte Folien 13 abwechselnd miteinander gestapelt und anschließend S-förmig gewunden in das Gehäuse 10 eingefügt worden sind. Durch die S-förmige Windung der Folie wird erreicht, dass diese alle mit allen Enden 17 der Folien an der Innenfläche des Gehäuses 10 anliegen. Damit wird die Möglichkeit eröffnet, jede Folie wenigstens an den beiden Enden sicher zum Gehäuse zu fixieren. In Folge der Anordnung von glatten Folien 12 und strukturierten Folien 13 werden Kontaktpunkte 16 gebildet, an denen die Folien aneinander anliegen. Die hier von der Stirnseite 11 betrachteten Kontaktpunkte 16 erstrecken sich im Wesentlichen linienförmig durch den Wabenkörper 1 hindurch, wobei jedoch gegebenenfalls nur ein Teilbereich der gesamten linienförmigen Kontaktpunkte 16 tatsächlich mit einer Lötstelle 15 ausgeführt sind. Auch die Anzahl der Kontaktpunkte 16, die eine Lötstelle 15 ausbilden sollen, kann relativ klein sein. So können die Folien beispielsweise zunächst mit einem Haftmittel in konkreten, vorgegebenen, lokal eng begrenzten Teilabschnitten versehen werden, so dass ein Nickel-Basis-Lot 2 nur genau an diesen vorgegebenen Teilabschnitten haften bleibt und später eine Lötstelle 15 ausbildet. Bevorzugt ist nun beispielsweise, dass zumindest in einem Querschnitt parallel zur Stirnseite 11 alle Folien eine Lötstelle 15 mit dem Gehäuse 10 ausbilden, wobei in diesem bzw. in einem anderen Querschnitt höchstens 10 % oder sogar höchstens nur 5 % der Kontaktpunkte 16 der Folien miteinander mit einer Lötstelle 15 ausgeführt sind.

Die mit der glatten Folie 12 und der strukturierten Folie 13 gebildeten Kanäle 14 können schließlich mit einer katalytisch aktiven Substanz versehen werden, so dass der Wabenkörper, insbesondere als Katalysator-Trägerkörper zur Behandlung von Abgasen eingesetzt werden kann, die z. B. bei Verbrennungsmotoren im Automobilbau erzeugt werden.

Fig. 2 soll schematisch einen möglichen Herstellungsprozess für solche Wabenkörper veranschaulichen. Dabei erfolgt beispielsweise zunächst eine Folienbearbeitung (A). Während der Folienbearbeitung findet insbesondere die Strukturierung der Folie statt, wobei gegebenenfalls auch noch eine mechanische und/oder chemische Behandlung der Folien vorgenommen werden kann. Daran anschlie-βend kann ein Haftmittelauftrag (B) zu zumindest einer der Folien des Wabenkörpers erfolgen. Hierbei wird insbesondere an gezielt vorgegebenen Positionen der strukturierten Folie und/oder der glatten Folie ein Klebstoff oder dergleichen aufgetragen, an dem später das zugeführte Lotmaterial haften soll. Nach diesen vorbereitenden Maßnahmen kann die Wabenkörpermontage (C) beginnen. Hierfür können eine vorgegebene Anzahl von glatten Folien und strukturierten Folien geschichtet und in ein Gehäuse (zumindest teilweise) eingefügt werden, wobei die Folien hierbei auch noch umgeformt werden können, insbesondere gewickelt oder gewunden. Insbesondere ist nach der Wabenkörpermontage (C) erreicht, dass die Folien zueinander bzw. zum Gehäuse hin in der gewünschten Position (z. B. mittels einer entsprechenden Vorspannung) so fixiert sind, dass sie für die nachfolgende Behandlung nicht mehr gegeneinander verrutschen. Eine Vielzahl solcher Wabenkörper können dann beispielsweise positioniert werden. Auf diese Weise ist dann eine Bestückung (D) eines Fördersystems für die thermische Behandlung ermöglicht, wobei die Wabenkörper beispielsweise auf geeigneten Paletten für den Transport geschützt und stabil gefördert werden. Daran anschließend kann nun das erfindungsgemäße Verfahren durchgeführt werden. Dabei wird die Mehrzahl von Wabenkörpern zunächst in einem ersten Schritt vorgewärmt (E). Dann erfolgt die Vorbehandlung (F) gemäß Schritt a). Daran schließt der Kühlprozess (G) an, wie hier mit Schritt b) des erfindungsgemäßen Verfahrens erläutert. Nun erfolgt das tatsächliche Löten (H) gemäß dem Schritt c). Nach dem Löten (H) erfolgt ein erneuter Kühlprozess (G), wie er mit Schritt d) des Verfahrens erläutert wird. Bei der hier veranschaulichten Variante wird anschließend auch noch ein Oxidieren (I) durchgeführt, wie es gemäß Schritt e) des Verfahrens erläutert wurde. Nur der Vollständigkeit halber sei hier nochmals darauf hingewiesen, dass das Oxidieren (I) auch direkt im Anschluss an das Löten (H) erfolgen kann, z.B. in einem in entsprechende Kammern unterteilter Ofen. Wenn die Wabenkörper dann abgekühlt sind, können diese gegebenenfalls noch beschichtet werden (K), wobei das Beschichten (K) regelmäßig nicht mehr im geschlossenen Fördersystem sondern extern durchgeführt wird.

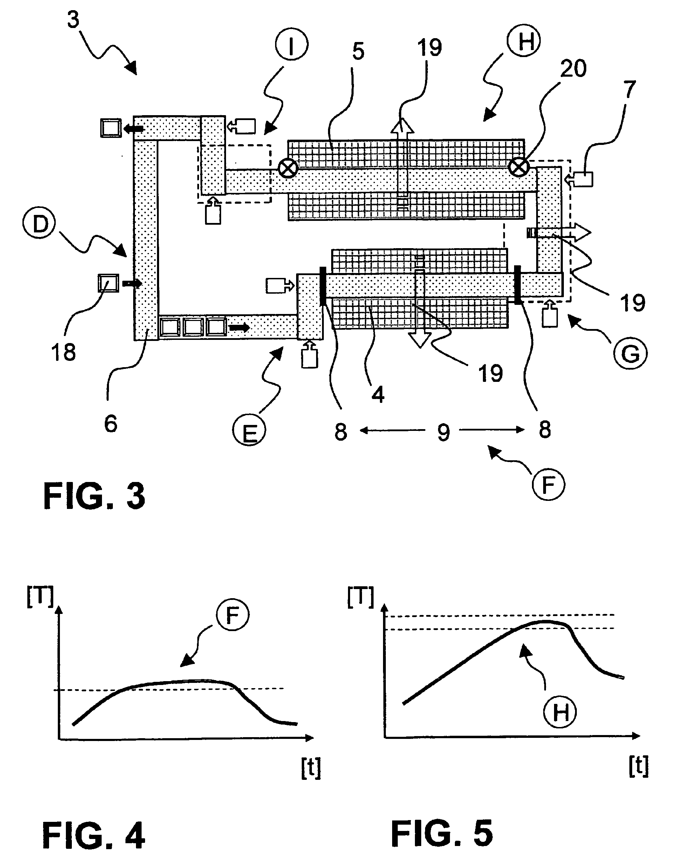

In Fig. 3 ist ein möglicher Aufbau für eine Vorrichtung 3 zur Durchführung des Verfahrens mit den Schritten a) bis e) veranschaulicht. Links in Fig. 3 ist zunächst veranschaulicht, dass Paletten 18 mit den Wabenkörpern auf ein Fördersystem 6 bestückt werden (D). Diese werden dann zunächst vorgewärmt, wobei die Paletten in eine entsprechende Zone bewegt werden (E). Zur Förderung der Paletten 18 werden mehrere Taktantriebe 7 eingesetzt, die die Paletten ohne große Erschütterung vorwärts schieben.

Nach dem Vorwärmen werden die Paletten 18 in einen ersten Ofen 4 eingeführt, der mittels zweier Schieber 8 von der restlichen Umgebung getrennt ist, so dass eine vorgegebene Umgebungszone 9 realisiert ist. In diesem ersten Ofen 4 erfolgt das Vorbehandeln der Wabenkörper; vgl. Schritt a) des Verfahrens. Dabei wird insbesondere eine Temperatur von oberhalb 400 °C eingestellt, wobei eine permanente Prozessgasspülung 19 verwirklicht ist.

Nach dem Durchlaufen des ersten Ofens 4 erreichen die Paletten 18 mit den Wabenkörpern zunächst einen Abkühlbereich (G), wobei die Wabenkörper bis hin zum zweiten Ofen 5, z. B. mittels einer Warmhaltevorrichtung auf Temperaturen zwischen 50 und 100 °C gehalten werden, wobei auch hier eine permanente Prozessgasspülung 19, insbesondere mit Argon, realisiert ist. Während im ersten Ofen 4 noch ein leichter Unterdruck eingestellt ist, der mit den Schiebern 8 begrenzt wird, herrscht im anschließenden Bereich wieder Atmosphärendruck.

Danach erreichen die Paletten 18 mit den Wabenkörpern einen zweiten Ofen 5, in dem das tatsächliche Löten (H) gemäß Schritt c) des Verfahrens durchgeführt wird. Zur Überwachung der Reinheit der Prozessgase sind Sensoren 20 am Eintritt und Austritt des zweiten Ofens 5 vorgesehen. Außerdem ist auch möglich, am Auslauf des zweiten Ofens 5 direkt eine Kammer vorzusehen, in der das Oxidieren (I) bereits (teilweise) durchgeführt wird.

Nach Verlassen des zweiten Ofens erfolgt zunächst ein Abkühlen und danach (alternativ oder kumulativ) ein Oxidieren (I) der Wabenkörper, bevor sie letztendlich wieder in einen Abschnitt des Fördersystems 6 transportiert werden, in dem die fertig behandelten Wabenkörper wieder entnommen werden können.

Die Fig. 4 veranschaulicht schematisch den Temperaturverlauf der Wabenkörper beim Durchlauf des ersten Ofens 4 bzw. bei der Durchführung des Schrittes a) des Verfahrens. Folglich ist hierbei die Temperatur [T] über die Zeit [t] beim Vorbehandeln (F) veranschaulicht. Gestrichelt dargestellt ist dabei die Grenztemperatur, die insbesondere mit 400 °C angegeben wird. Es ist zu erkennen, dass ein Großteil der Zeitdauer und des Vorbehandelns (F) eine Temperatur oberhalb dieser Grenztemperatur bezüglich der Wabenkörper eingehalten wird.

Dem gegenüber zeigt Fig. 5 schematisch den Temperaturverlauf der Wabenkörper während des Lötens (H) gemäß einer Variante des Schrittes c) des Verfahrens. Dargestellt ist erneut die Temperatur [T] über die Zeit [t], wobei die Relationen hin zur Fig. 4 nicht maßstäblich sind. Zu erkennen ist jedoch in Fig. 5, dass während einer großen Zeitspanne des Lötens (H) ein Aufwärmprozess stattfindet, und die Wabenkörper nur in einer verkürzten Zeitspanne in dem angegebenen Temperaturbereich verweilen, bevor das Abkühlen wieder einsetzt.

### Bezugszeichenliste

- 1: Wabenkörper
- 2: Nickel-Basis-Lot
- 3: Vorrichtung
- 4: erster Ofen
- 5: zweiter Ofen
- 6: Fördersystem
- 7: Taktantrieb
- 8: Schieber
- 9: Umgebungszone
- 10: Gehäuse
- 11: Stirnseite
- 12: glatte Folie
- 13: strukturierte Folie
- 14: Kanal
- 15: Lötstelle
- 16: Kontaktpunkt
- 17: Ende
- 18: Palette
- 19: Prozessgasspülung
- 20: Sensor

- A: Folienbearbeitung
- B: Haftmittelauftrag
- C: Wabenkörpermontage
- D: Bestückung
- E: Vorwärmen
- F: Vorbehandeln (Schritt a))
- G: Kühlprozess (Schritte b) und d))
- H: Löten (Schritt c))
- I: Oxidieren (Schritt e))
- K: Beschichten

## Patentansprüche

1. Verfahren zum Löten eines metallischen Wabenkörpers (1) zur Abgasbehandlung umfassend zumindest folgende Schritte:
a) Vorbehandeln des Wabenkörpers (1) bei einer Temperatur oberhalb von 400 °C;
b) Abkühlen des Wabenkörpers (1);
c) Löten des Wabenkörpers (1) bei einer Temperatur im Bereich von 1050 °C bis 1100 °C unter Atmosphärendruck;
d) Abkühlen des Wabenkörpers (1).

2. Verfahren nach Patentanspruch 1, bei dem zumindest während der Schritte a) und c) eine permanente Prozessgasspülung (19) durchgeführt wird.

3. Verfahren nach Patentanspruch 1 oder 2, bei dem während Schritt c) überwiegend eine Temperaturerhöhung stattfindet.

4. Verfahren nach einem der vorhergehenden Patentansprüche, bei dem während Schritt c) eine Reinheit des Prozessgases von zumindest 99,999% realisiert wird.

5. Verfahren nach einem der vorhergehenden Patentansprüche, bei dem der Wabenkörper (1) mit einem Eisen-Werkstoff gebildet ist, der als Haupt-Legierungselemente Chrom und Aluminium aufweist, wobei der Chrom-Anteil mindestens um den Faktor 3 größer ist als der Aluminium-Anteil.

6. Verfahren nach einem der vorhergehenden Patentansprüche, bei dem ein Nickel-Basis-Lot (2) eingesetzt wird, wobei als Haupt-Zusatzstoffe Chrom, Phosphor und Silizium vorhanden sind.

7. Verfahren nach einem der vorhergehenden Patentansprüche, bei dem nach Schritt c) in einem Schritt e) der Wabenkörper (1) oxidiert wird.

8. Verfahren nach einem der vorhergehenden Patentansprüche, bei dem während Schritt c) eine Überwachung des Sauerstoffgehalts erfolgt.

9. Verfahren nach einem der vorhergehenden Patentansprüche, bei dem das Prinzip des Durchlauf-Prozesses verwirklicht ist.

## Claims

1. Method for brazing a metallic honeycomb body (1) for exhaust gas treatment, comprising at least the following steps:
a) pretreatment of the honeycomb body (1) at a temperature of above 400°C;
b) cooling of the honeycomb body (1);
c) brazing of the honeycomb body (1) at a temperature in the range of 1050°C to 1100°C under atmospheric pressure;
d) cooling of the honeycomb body (1).

2. Method according to claim 1, wherein a permanent process gas scavenging (19) is carried out at least during steps a) and c).

3. Method according to claim 1 or 2, wherein a temperature increase takes place predominantly during step c).

4. Method according to one of the preceding claims, wherein a purity of the process gas of at least 99.999% is realised during step c).

5. Method according to one of the preceding claims, wherein the honeycomb body (1) is formed by an iron material which has chrome and aluminium as the main alloying elements, wherein the chrome fraction being greater than the aluminium fraction by at least the factor 3.

6. Method according to one of the preceding claims, wherein a nickel-based brazing material (2) is used, wherein chrome, phosphorus and silicon are present as main additives.

7. Method according to one of the preceding claims, wherein the honeycomb body (1) is oxidized after step c) in a step e).

8. Method according to one of the preceding claims, wherein a monitoring of the oxygen content takes place during step c).

9. Method according to one of the preceding claims, wherein the principle of the continuous-flow process is implemented.

## Revendications

1. Procédé de brasage d'un corps métallique (1) en nid d'abeilles destiné au traitement de gaz d'échappement, le procédé comportant au moins les étapes suivantes :
a) prétraitement du corps (1) en nid d'abeilles à une température supérieure à 400°C,
b) refroidissement du corps (1) en nid d'abeilles,
c) brasage sous pression atmosphérique du corps (1) en nid d'abeilles à une température comprise dans la plage de 1 050°C à 1 100°C et
d) refroidissement du corps (1) en nid d'abeilles.

2. Procédé selon la revendication 1, dans lequel un balayage permanent (19) par le gaz de traitement est exécuté au moins pendant les étapes a) et c).

3. Procédé selon les revendications 1 ou 2, dans lequel une augmentation de température a lieu principalement pendant l'étape c).

4. Procédé selon l'une des revendications précédentes, dans lequel le gaz de traitement utilisé pendant l'étape c) a une pureté d'au moins 99,999 %.

5. Procédé selon l'une des revendications précédentes, dans lequel le corps (1) en nid d'abeilles est formé d'un matériau à base de fer qui présente comme éléments principaux d'alliage le chrome et l'aluminium, la teneur en chrome étant supérieure à la teneur en aluminium d'un facteur d'au moins 3.

6. Procédé selon l'une des revendications précédentes, dans lequel on utilise une brasure (2) à base de nickel, qui contient comme additifs principaux du chrome, du phosphore et du silicium.

7. Procédé selon l'une des revendications précédentes, dans lequel le corps en nid d'abeilles (1) est oxydé dans une étape e) après l'étape c).

8. Procédé selon l'une des revendications précédentes, dans lequel la teneur en oxygène est surveillée pendant l'étape c).

9. Procédé selon l'une des revendications précédentes, qui met en oeuvre le principe d'une opération en continu.
